# EUROPÄISCHE PATENTSCHRIFT

(11) **EP 0 930 359 B1**
(45) Veröffentlichungstag und Bekanntmachung des Hinweises auf die Patenterteilung: **03.01.2007**
(21) Anmeldenummer: 98116608.5
(22) Anmeldetag: 02.09.1998
(51) Int. Cl.: C12C 12/02, C12G 3/02, C12C 5/02, C12G 3/06, A23L 2/38

(54) **Verfahren zur Herstellung von Getränken auf fermentativem Wege**
Method of making a beverage by fermentation
Procédé de production d'une boisson par fermentation

(30) Priorität: 19.12.1997 DE 19756897
(43) Veröffentlichungstag der Anmeldung: 21.07.1999
(73) Patentinhaber: Scarabäus GmbH, 84072 Au i. d. Hallertau (DE)
(72) Erfinder: Geiger, Eberhard, Prof. Dr., 85354 Freising (DE); Briem, Fritz, Dr., 85737 Ismaning (DE); Strachotta, Thilo, Dr., 92237 Sulzbach-Rosenberg (DE)
(74) Vertreter: Müller, Bernhard

(56) Entgegenhaltungen:
- DE-A- 4 012 000
- DE-U- 29 713 010
- FR-A- 2 672 614
- GB-A- 984 473

## Beschreibung

Die Erfindung betrifft ein Verfahren zur Herstellung von Getränken auf fermentativem Wege, wobei es sich bei den Produkten um alkoholfreie Getränke oder um Getränke mit geringem Alkoholgehalt handeln kann.

In den letzten Jahren ist beim Konsum von herkömmlichen alkoholischen Getränken, wie Bier und Wein, eine Stagnation oder ein leichter Rückgang eingetreten. Zugenommen hat dagegen der Verbrauch von alkoholfreien Erfrischungsgetränken sowie von Getränken mit niedrigem Alkoholgehalt. Die weitere Verbreitung von solchen neuartigen Getränken ist aber insbesondere bei gesundheitsbewußten Verbraucherkreisen eingeschränkt, da dort eine gewisse Zurückhaltung gegen chemische Bearbeitungsstufen und gegen in derartigen Getränken häufig enthaltene "chemische" Inhaltsstoffe besteht.

Aufgabe der Erfindung ist es, ein Verfahren zur Herstellung eines Getränks aus biologischen Ausgangsstoffen unter Anwendung fermentativer Verfahren bereitzustellen.

Erfindungsgemäß wird ein Verfahren zur Herstellung eines Getränks auf fermentativem Wege bereitgestellt, das durch folgende Stufen gekennzeichnet ist:
a) es wird ein einen Cerealienextrakt enthaltendes Ausgangsmaterial bereitgestellt,
b) dieses Material wird der folgenden zweistufigen Behandlung unterzogen, wobei diese beiden Stufen in beliebiger Reihenfolge, nicht aber gleichzeitig, ablaufen können,
b1) Behandlung mit Lactobacillus und Hefe oder Hefelysat
b2) Behandlung mit Acetobacteriaceae, die die durch Lactobacillus bereitgestellten Kohlenhydrate verstoffwechseln können
c) das Produkt von Stufe b) wird auf an sich übliche Weise zu einem Gärgetränk verarbeitet.

Als Ausgangsmateralien in Stufe a) werden vorzugsweise folgende Bestandteile eingesetzt: Vorderwürze, Ausschlagwürze, Bier, Gersten-, Reis-, Mais-, Hirse-, Weizen-, Roggen- oder Buchweizenextrakt.

Ein besonders bevorzugtes Ausgangsmaterial gemäß Stufe a) ist eine Würze, wie sie üblicherweise bei der Bierherstellung eingesetzt wird. Dieses Material steht gewerblich in großen Mengen zu günstigen Preisen zur Verfügung und liefert eine wertvolle Basis für die Herstellung von wohlschmeckenden Getränken. Es kann sich hierbei um Vorderwürze, Ausschlagwürze oder sonstige bei der Bierbereitung anfallende Würzen handeln. Ein genereller Vorteil des Einsatzes von Bierwürzen besteht darin, daß Bierwürze in Brauereien, deren Kapazität oft nicht ausgelastet ist, mit der dort verfügbaren Einrichtung hergestellt und verarbeitet werden kann.

Besonders bevorzugt ist die Verwendung einer ungehopften Malzvorderwürze, die auf einen Stammwürzegehalt von etwa 4% verdünnt ist. Eine derartige verdünnte Würze enthält als Zucker anteilig etwa 1% Fructose, 10% Glucose, 1% Saccharose, 45% Maltose und 10% Maltotriose. Der Rest der Zucker besteht hauptsächlich aus niederen und höheren Dextrinen.

Zur Geschmacksabrundung und zum Einbringen von wertvollen biologischen Inhaltsstoffen können die Ausgangsmateralien mit einem untergeordneten Anteil an Fruchtextrakten, Blütenextrakten, Gemüseextrakten, Melasse, Tee, Kräutern und dergl. versetzt werden. Derartige Zusätze können aber auch erst im Anschluß an die fermentative Behandlung zugesetzt werden.

Die Teilstufen b1) und b2) können in beliebiger Reihenfolge durchgeführt werden.

In der Stufe b1) wird durch die fermentative Behandlung mit Lactobacillus und Hefe oder Hefelysat ein erheblicher Teil der in der Würze enthaltenen Glucose und geringe Teile der höheren und niederen Dextrine verstoffwechselt. Dabei entstehen unter anderem Ethanol, Lactat, Pyruvat, Malat, Kohlensäure und Citrat. Dieser Vorgang hat den Vorteil, daß durch den Glucoseabbau der Hefe der Kaloriengehalt des Getränks gesenkt oder im Falle der fermentativen Behandlung mit Lactobacillus sp. geringfügig gesenkt wird und gleichzeitig wertvolle und zum Teil angenehm säuerlich schmeckende Stoffwechselprodukte entstehen. Bei Behandlung mit Hefe kann der fermentative Prozeß so geführt werden, daß ein Alkoholgehalt von < 0,5% entsteht, so daß die Getränke als alkoholfrei gelten.

Andererseits ist es aber auch möglich, eine alkoholische Gärung bis zum Erreichen eines Alkoholgehalts von beispielsweise 1,8% vorzunehmen.

Bei der fermentativen Behandlung mit Hefe (bei Behandlung mit Hefelysat entfällt die Belüftung) wird vorzugsweise zunächst das Ausgangsmaterial durch Belüften mit Sterilluft auf einen Sauerstoffgehalt von etwa 6-12 mg/l eingestellt. Anschließend erfolgt das Beimpfen mit einer homofermentativen Lactobazillenart, die vorwiegend L(+)-Lactat bildet. Als Lactobazillenarten kommen L. acidophilus, L. helveticus, L. amilophilus oder L. salivarius in Frage. Zum Einsatz können auch Arten kommen, die die im Substrat vorhandenen Dextrine metabolisieren können (vorzugsweise L. amylovorus, Pediococcus dextrinicus). Durch die Fermentation werden die eingangs genannten vergärbaren Zucker teilweise in Milchsäure umgewandelt. Die Inokulationskonzentration beträgt vorzugsweise etwa 10-200 Millionen Zellen/ml und insbesondere 50-100 Millionen Zellen/ml. Die Fermentation wird vorzugsweise bei einer erhöhten Temperatur von 30-50°C und insbesondere 45-50°C durchgeführt. Der pH-Wert des Substrats beträgt etwa 4,5-6,5. Vorzugsweise wird der Fermenter während der Fermentation mit Lactobazillen unter Kohlendioxid gesetzt. Bei Erreichen einer Milchsäurekonzentration von 0,2-0,8% wird zum Stoppen des Fermentationsvorgangs kurz auf 60°C erhitzt, anschließend auf 20-30°C gekühlt und permanent mit Luft begast.

Bei Durchführung einer Behandlung mit Hefelysat in Stufe b) bewirken die im Hefelysat enthaltenen, noch funktionsfähigen Enzyme einen Kohlenhydratabbau unter Bildung der vorstehend genannten Stoffwechselprodukte. Dabei kann das Ausgangsprodukt mit bis zu 10% homogenisiertem Hefelysat versetzt werden, der aus einer wäßrigen Lösung mit etwa 1 Milliarde Zellen/ml hergestellt worden ist. Die Herstellung des Hefelysats erfolgt durch einen Zellaufschluß im Hochdruckhomogenisator.

Der Einsatz von Hefe und Hefelysat hat auch den Vorteil, daß die im Brauereibetrieb in großen Mengen anfallende Hefe einer wirtschaftlichen Verwertung zugeführt werden kann und dabei in das Getränk wertvolle Inhaltsstoffe der Hefe, wie Vitamine und Mineralien, eingebracht werden.

In der Stufe b2) werden noch verbliebene und durch die Stufe b1) bereitgestellte verstoffwechselbare Zucker teilweise in Gluconolacton und dessen Ketosäuren umgewandelt. Hierzu dienen insbesondere verschiedene Gluconobacterarten, wie Gluconobacter oxydans ssp. industricus, Gluconobacter oxydans ssp. oxydans, Gluconobacter oxydans ssp. melanogenes, Gluconobacter oxydans ssp. suboxydans oder Gluconobacter oxydans ssp. cerinus. Dabei erfolgt vorzugsweise eine Inokulation mit 10-150 Millionen Zellen/ml und insbesondere mit 50-150 Millionen Zellen/ml. Hierbei wird vorzugsweise darauf geachtet, einen Organismus einzusetzen, der Maltose und Maltotriose verstoffwechseln kann. Die Fermentation wird bis zu einem Gesamtsäuregehalt von 0,5-3,0% und insbesondere von 1,5-2,5% durchgeführt. Der pH-Wert des Produkts beträgt nunmehr 2,3-3,5.

Die Fermentation von Stufe b) wird durch Entfernen der Mikroorganismen mittels Filtration gestoppt. Alternativ kommen auch ein kombiniertes Separations-Filtrations-Verfahren und/oder eine Kurzzeiterhitzung in Frage.

Die dann erhaltene klare Lösung wird vorzugsweise mit Wasser im Verhältnis von 1:2 bis 3:1 verdünnt, wobei eine Gesamtsäurekonzentration von 0,2-2,0% und insbesondere 0,4-1,8% eingestellt wird.

Bei Bedarf kann der pH-Wert durch Zugabe von Carbonaten erhöht werden. Die Zugabe von Calciumcarbonat und/oder Magnesiumcarbonat ist dabei bevorzugt, da hierdurch wertvolle Mineralstoffbestandteile in das Getränk eingebracht werden. Diese Zugabe kann chargenweise und/oder kontinuierlich in einem beliebigen Verfahrensstadium erfolgen, um für die verschiedenen Mikroorganismen optimale Verfahrensbedingungen zu schaffen oder sie kann erst am Schluß erfolgen, um den gewünschten angenehmen Säureeindruck beim Verkosten des Getränks zu vermitteln.

Gegebenenfalls kann das in Stufe b) gewonnene Produkt mit Zucker und/oder Zuckeraustauschstoffen (Saccharin, Cyclamat) ausgesüßt werden und/oder mit natürlichen Blüten- und/oder Fruchtauszügen, Bierwürze und/oder Aromen abgestimmt werden, um ein wohlschmeckendes Getränk der gewünschten Geschmacksrichtung zu erhalten.

Ist die Herstellung eines kohlensäurehaltigen Getränks erwünscht, so erfolgt eine Carbonisierung auf 1-7 g/l. Diese Carbonisierung kann dazu dienen, das Wachstum von aeroben Mikroorganismen im Getränk zu vermeiden und andererseits ein angenehmes Mundgefühl hervorzurufen.

Gemäß einer bevorzugten Ausführungsform wird das Ausgangsprodukt zunächst mit Hefe oder Hefelysat versetzt. Bei Zusatz von vitaler Hefe und einer vorherigen Belüftung mit Sterilluft wird primär Glucose und Fructose von der Hefe für den aeroben Stoffwechsel (Anabolismus) aufgenommen. Es entstehen nur geringfügige Mengen Ethanol. Bei der anschließenden mikrobiologischen Gluconolactonbildung, z.B. durch Gluconobacter, kann es zu einer mikrobiologischen Oxidation des vorliegenden Ethanols zu Acetat kommen. Es entsteht somit ein weiteres geschmacksintensives Stoffwechselprodukt. Sofern vorher eine Milchsäurefermentation stattgefunden hat, können bestimmte Acetobacterarten aus Lactat gewisse Mengen an Acetat bilden.

Alternativ kann gemäß einer weiteren bevorzugten Ausführungsform zuerst die Acetobacterfermentation (Stufe b2)) und dann eine Lactobacillusfermentation (Stufe b1)) durchgeführt werden. Dabei wird zuerst eine Fermentation bei 26-35°C unter aeroben Bedingungen bis zum Erreichen eines Gesamtsäuregehalts von 0,8-1,5% durchgeführt. Anschließend erfolgt eine Milchsäuregärung bei 45-49°C unter anaeroben Bedingungen bis zum Erreichen eines Gesamtsäuregehalts von 1,5-2,7%.

Zur weiteren Verarbeitung wird das Getränk zur Konservierung einer Wärmebehandlung unterzogen. Hierbei kommt beispielsweise die Kurzzeiterhitzung in einem Plattenwärmetauscher oder die Pasteurisierung in der Flasche in Frage, so daß die mikrobiologische Stabilität durch Einwirkung von etwa 20-40 Pasteureinheiten gewährleistet werden kann.

Ein Zusatz von vitaler Hefe kann auch erst kurz vor dem Abfüllen des Getränks erfolgen, um eine Flaschengärung einzuleiten.

Zum Abpuffern der in den Verfahrensschritten b1) und b2) gebildeten Säuren kann anstelle von Carbonaten auch die im Beispiel 4 beschriebene, durch biologisches Sauergut gesäuerte Vorderwürze verwendet werden. Dies hat den Vorteil, daß zusätzlich zu den für die Abpufferung der Säure notwendigen Erdalkaliionen weitere ernährungsphysiologisch wertvolle Spurenelemente wie Zink und Mangan in das Getränk eingebracht werden können und der Süßeindruck des Getränkes nicht durch Saccharose, sondern über natürliche, aus dem Malz stammende Zucker eingestellt wird.

Die nach Beispiel 4 erhaltenen Flüssigkeiten können auch als eigenständige Getränke verwendet werden.

Die erfindungsgemäß erhaltenen Getränke eignen sich auch zum Vermischen mit normalem alkoholhaltigem oder alkoholfreiem Bier.

Nachstehend wird die Erfindung anhand von Beispielen näher erläutert.

### Beispiel 1

Eine ungehopfte Malzvorderwürze wird auf einen Stammwürzegehalt von 4% verdünnt. Diese Lösung enthält als Zucker anteilig etwa 1% Fructose, 10% Glucose, 1% Saccharose, 45% Maltose und 10% Maltotriose. Ferner enthält der Auszug niedere und höhere Dextrine. Der 4%ige Extrakt enthält somit etwa 67% direkt fermentierbare Zucker (absolut etwa 2,7 g/100 ml).

Die verdünnte Würze wird mit 2% homogenisiertem Hefelysat versetzt, das aus einer wäßrigen Lösung mit etwa 1 Milliarde Zellen/ml hergestellt worden ist.

Die Lösung wird nunmehr mit Lactobacillus salivarius in einer Inokulationskonzentration von etwa 100 Millionen Zellen/ml bei einer Temperatur von 48°C beimpft. Der pH-Wert des Substrats beträgt etwa 6,0. Während der Fermentation mit den Lactobazillen wird der Fermenter unter Kohlendioxid gesetzt. Bei Erreichen einer Milchsäurekonzentration von 0,4% wird kurz auf 60°C erhitzt, anschließend auf 24°C abgekühlt und permanent mit Luft begast.

Sodann erfolgt eine Beimpfung mit Gluconobacter oxydans in einer Inokulationsmenge von etwa 100 Millionen Zellen/ml. Eine Fermentation wird bis zu einem Gesamtsäuregehalt von 1,6% durchgeführt. Der pH-Wert beträgt nunmehr 2,8.

Die Fermentation wird jetzt durch Entfernen der Mikroorganismen durch Zentrifugation und Filtration gestoppt. Die erhaltene klare Lösung wird im Verhältnis 1:1 mit Wasser verdünnt, wodurch man eine Gesamtsäurekonzentration von 0,8% erreicht. Der pH-Wert wird durch Zugabe von Calcium und Magnesium im Verhältnis 3 : 2 in Form von Carbonaten auf 3,5 eingestellt. Im Anschluß daran wird die Lösung mit 15% ungehopfter Malzvorderwürze (16%-ig) ausgesüßt und mit 2,5% Blütenextrakt aromatisiert. Das Getränk wird sodann auf einen Kohlensäuregehalt von 4 g/l carbonisiert. Nach dem Abfüllen wird das Getränk in einer Tunnelpasteurisierungsvorrichtung mit 30 Pasteureinheiten pasteurisiert.

### Beispiel 2

Eine Teemischung wird mit verdünnter, ungehopfter Malzvorderwürze mit einem Stammwürzegehalt von 4% aufgebrüht. Der pH-Wert des so erhaltenen Substrats beträgt etwa 5,0. Dieses Substrat wird mit Bierhefe angegoren, wobei eine Inokulation mit einer Zellzahl von 10 Millionen Zellen/ml bei 15°C erfolgt. Die Gärung wird bei einem Alkoholgehalt von etwa 1% abgebrochen.

Die so erhaltene Lösung wird mit Gluconobacter oxydans (etwa 100 Millionen Zellen/ml) bei 24°C beimpft und permanent belüftet. Während der Fermentation werden ständig Carbonate zudosiert (Calcium und Magnesium im Verhältnis 3 : 1 in Form von Carbonaten), so daß der pH-Wert nicht unter 3,3 sinkt. Die Fermentation wird durch das Entfernen der Mikroorganismen mittels Zentrifugation und Filtration gestoppt. Die erhaltene Lösung wird im Verhältnis 1 : 1 mit Wasser verdünnt, so daß sich eine Gesamtsäurekonzentration von 0,8% ergibt. Schließlich wird das Getränk mit 2,5 g/100 ml Saccharose ausgesüßt und auf einen Kohlensäuregehalt von 2,5 g/l carbonisiert. Anschließend wird das Getränk abgefüllt und in der Flasche pasteurisiert, so daß durch das Einwirken von etwa 30 Pasteureinheiten die mikrobiologische Stabilität gewährleistet werden kann.

### Beispiel 3

Eine ungehopfte Malzvorderwürze wird auf einen Stammwürzegehalt von 4% verdünnt. Es erfolgt das Beimpfen mit Gluconobacter oxydans ssp. oxydans in einer Inokulationsmenge von etwa 50 Millionen Zellen/ml. Die Fermentation wird bis zu einem Gesamtsäuregehalt von 1,8% durchgeführt. Der pH-Wert beträgt nun 2,6. Der pH-Wert wird durch Zugabe von Calcium und Magnesium im Verhältnis 3:1 in Form von Carbonaten auf 3,8 eingestellt.

Danach wird die Lösung mit Lactobacillus amilophilus in einer Inokulationskonzentration von etwa 30 Millionen Zellen/ml bei einer Temperatur von 48°C beimpft. Während dieses Produktionsschrittes wird der Fermenter unter Kohlendioxid gesetzt. Die Fermentation wird bis zu einer Lactatkonzentration von etwa 1,0% geführt. Der pH-Wert der Lösung beträgt etwa 3,4. Die Fermentation wird jetzt durch Entfernen der Mikroorganismen mittels Zentrifugation und Filtration gestoppt.

Die erhaltene klare Lösung wird im Verhältnis 2:1 mit Wasser verdünnt, wodurch man eine Gesamtsäurekonzentration von etwa 0,9% erreicht. Im Anschluß daran wird die Lösung mit 15% ungehopfter Weizenmalzvorderwürze (16%-ig) ausgesüßt und mit Beerenexrakt aromatisiert. Das Getränk wird sodann auf einen Kohlensäuregehalt von 7 g/l carbonisiert. Nach dem Abfüllen wird das Getränk in einer Tunnelpasteurisierungsvorrichtung mit 30 Pasteureinheiten thermisch behandelt.

### Beispiel 4:

Es wird eine Malzmaische bei 48 °C im Verhältnis 1:4 (Malz:Brauwasser) eingemaischt und unmittelbar nach dem Einmaischen mit brauereiüblichem Sauergut beimpft (ca. 1%) und 12 Stunden bei 48 °C ohne Rühren stehengelassen. Bei einem pH-Wert von 3 - 3,5 wird dann mit einer starken Betonung der Maltose- und Eiweißabbauvorgänge weitergemaischt. Die abgeläuterte Pfanne-voll-Würze wird auf 15 Bittereinheiten gehopft und 70 min. lang gekocht. Die gekühlte 12 %-ige Anstellwürze wird mit obergäriger Hefe vergoren und im Anschluß an die Gärung zentrifugiert und kieselgurfiltriert, im Verhältnis 1:3 mit Brauwasser verdünnt und mit 2 % Saccharose ausgesüßt. Die so erhaltene Flüssigkeit kann dann in üblicher Weise zu einem Getränk weiterverarbeitet oder zum Abpuffem und Aussüßen eines Getränks nach einem der vorstehenden Beispiele verwendet werden.

### Beispiel 5:

Eine ungehopfte Malzvorderwürze wird auf einen Stammwürzegehalt von 4% verdünnt. Diese Lösung enthält als Zucker anteilig etwa 1% Fructose, 10% Glucose, 1% Saccharose, 45% Maltose und 10% Maltotriose. Ferner enthält der Auszug niedere und höhere Dextrine. Der 4%ige Extrakt enthält somit etwa 67% direkt fermentierbare Zucker (absolut etwa 2,7 g/100ml). Die verdünnte Würze wird mit 2% homogenisiertem Hefelysat versetzt, das aus einer wäßrigen Lösung mit etwa 1 Milliarde Zellen/ml hergestellt worden ist.

Die Lösung wird nunmehr mit Lactobacillus salivarius in einer Inokulationskonzentration von etwa 100 Millionen Zellen/ml bei einer Temperatur von 48°C beimpft. Der pH-Wert des Substrats beträgt etwa 6,0. Während der Fermentation mit den Lactobazillen wird der Fermenter unter Kohlendioxid gesetzt. Bei Erreichen einer Milchsäurekonzentration von 0,4% wird kurz: auf 60°C erhitzt, anschließend auf 24°C abgekühlt und permanent mit Luft begast.

Sodann erfolgt eine Beimpfung mit Gluconobacter oxydans in einer Inokulationsmenge von etwa 100 Millionen Zellen/ml. Eine Fermentation wird bis zu einem Gesamtsäuregehalt von 1,6% durchgeführt. Der pH-Wert beträgt nunmehr 2,8.

Die Fermentation wird jetzt durch Entfernen der Mikroorganismen durch Zentrifugation und Filtration gestoppt. Die erhaltene klare Lösung wird im Verhältnis 1:1 mit Wasser verdünnt, wodurch man eine Gesamtsäurekonzentration von 0,8% erreicht. Der pH-Wert wird durch Zugabe von Calcium und Magnesium im Verhältnis 3:2 in Form von Carbonaten auf 3,5 eingestellt. Im Anschluß daran wird die Lösung mit 15% ungehopfter Malzvorderwürze (16%-ig) ausgesüßt.

Die so erhaltene Lösung wird mit 20% normalem obergärigem Weizenbier ausgemischt und auf 6 g/l Kohlensäure carbonisiert. Das so erhaltene Getränk wird dann kurzzeiterhitzt bzw. im Gebinde pasteurisiert.

## Patentansprüche

1. Verfahren zur Herstellung eines Getränkes, **gekennzeichnet durch** folgende Stufen:
a) es wird ein einen Cerealienextrakt enthaltendes Ausgangsmaterial bereitgestellt,
b) dieses Material wird der folgenden zweistufigen Behandlung unterzogen, wobei diese beiden Stufen in beliebiger Reihenfolge, nicht aber gleichzeitig ablaufen können,
b1) Behandlung mit Lactobacillus und Hefe oder Hefelysat
b2) Behandlung mit Acetobacteriaceae, die die **durch** Lactobacillus bereitgestellten Kohlenhydrate verstoffwechseln können
c) das Produkt von Stufe b) wird auf an sich übliche Weise zu einem Gärgetränk verarbeitet.

2. Verfahren nach Anspruch 1, **dadurch gekennzeichnet, daß** man als Cerealienextrakt Vorderwürze, Ausschlagwürze, Bier, Gersten-, Reis-, Mais-, Hirse-, Weizen-, Roggen- oder Buchweizenextrakt verwendet.

3. Verfahren nach Anspruch 1, **dadurch gekennzeichnet, daß** im Ausgangsmateral als zusätzliche Bestandteile Melasse, Tee, Blütenextrakte, Fruchtextrakte, Gemüseextrakte und/oder Kräuter enthalten sind.

4. Verfahren nach Anspruch 1, **dadurch gekennzeichnet, daß** die Getränke zusätzlich mit Antioxidantien, Vitaminen, Carbonaten, Mineralstoffen, Aromen, Fettsäuren, Ballaststoffen, Koffein und/oder Guarana versetzt werden.

5. Verfahren nach Anspruch 1, **dadurch gekennzeichnet, daß** man in Stufe b) als Lactobazillenarten L. acidophilus, L. helveticus, L. amylovorus, L. amilophilus oder L. salivarius verwendet.

6. Verfahren nach Anspruch 1, **dadurch gekennzeichnet, daß** man als Hefe eine Saccharomycesart verwendet, die üblicherweise zur Bier- und Weinherstellung eingesetzt wird.

7. Verfahren nach Anspruch 1, **dadurch gekennzeichnet, daß** man als Vertreter der Familie Acetobacteriaceae Gluconobacter oxydans ssp. industricus, Gluconobacter oxydans ssp. oxydans, Gluconobacter oxydans ssp. melanogenes, Gluconobacter oxydans ssp. suboxydans oder Gluconobacter oxydans ssp. cerinus verwendet.

8. Verfahren nach Anspruch 1, **dadurch gekennzeichnet, daß** man ein alkoholfreies Getränk herstellt.

9. Verfahren nach Anspruch 1, **dadurch gekennzeichnet, daß** man ein alkoholhaltiges Getränk herstellt.

10. Verfahren nach Anspruch 1, **dadurch gekennzeichnet, daß** man in Stufe b) zuerst eine Behandlung mit Hefe und/oder Hefelysat und/oder Lactobacillus und anschließend die Gluconolactonbildung durchführt.

11. Verfahren nach Anspruch 1, **dadurch gekennzeichnet, daß** man in Stufe b) zuerst die Gluconolactonbildung und dann eine Milchsäuregärung durchführt.

12. Verfahren nach Anspruch 1, **dadurch gekennzeichnet, daß** man die gebildeten organischen Säuren mit mineralstoffreicher, gesäuerter Vorderwürze abpuffert und aussüßt.

13. Biermischgetränk, enthaltend ein nach dem Verfahren eines der Ansprüche 1-12 erhaltenes Getränk und alkoholhaltiges oder alkoholfreies Bier.

## Claims

1. Method for producing a beverage by fermentation **characterised by** the following steps:
a) production of a starting material containing a cereal extract
b) this material is subjected to the following two-stage treatment in any order, but not simultaneously:
b1) treatment with Lactobacillus and yeast or yeast lysate
b2) treatment with Acetobacteriaceae which are able to metabolise carbohydrates made available by Lactobacillus
c) the product of step b) is processed to a fermentation beverage by conventional operations

2. Method according to claim 1 **characterised by** using brewers first wort, brewers cast wort, beer, barley extract, rice extract, corn extract, sorghum extract, wheat extract, rye extract or buckwheat extract as cereal extract.

3. Method according to claim 1 **characterised by** using a starter material which contains molasses, tea, flower extracts, fruit extracts, vegetable extract and/or herbs as additional ingredients.

4. Method according to claim 1 **characterised by** adding antioxidants, vitamins, carbonates, minerals, flavours, fatty acids, dietary fibres, caffeine and/or Guarana to the beverages.

5. Method according to claim 1 **characterised by** using during treatment b) the following species of Lactobacillus: L. acidophilus, L. helveticus, L. amylovorus, L. amilophilus or L. salivarius

6. Method according to claim 1 **characterised by** using a species of Saccharomyces as yeast which is typically used in beer and wine production.

7. Method according to claim 1 **characterised by** using the following members of the family of Acetobacteriaceae: Gluconobacter oxydans ssp. industricus, Gluconobacter oxydans ssp. oxydans, Gluconobacter oxydans ssp. melanogenes, Gluconobacter oxydans ssp. suboxydans or Gluconobacter oxydans ssp. cerinus

8. Method according to claim 1 **characterised by** producing a non-alcoholic beverage.

9. Method according to claim 1 **characterised by** producing an alcohol containing beverage.

10. Method according to claim 1 **characterised by** conducting in step b) primarily a treatment with yeast and/or yeast extracts and/or Lactobacillus followed by the formation of Gluconolacton.

11. Method according to claim 1 **characterised by** conducting in step b) primarily the formation of Gluconolacton followed by a lactic acid fermentation.

12. Method according to claim 1 **characterised by** buffering and sweetening the accumulated organic acids with minerals containing and acidified brewers first wort.

13. Beer mix drink, containing a beverage produced by the method according to claims 1-12 and alcoholic or non-alcoholic beer.

## Revendications

1. Procédé de production d'une boisson, **caractérisé par** les étapes suivantes:
a) un matériau de base contenant un extrait de céréales est préparé,
b) ce matériau est soumis aux deux étapes de traitement décrites ci-dessous; l'ordre dans lequel les étapes se suivent n'a pas d'importance, cependant elles ne peuvent pas se dérouler simultanément,
b1) traitement avec Lactobacillus et levure ou lysate de levure
b2) traitement avec Acetobacteriaceae capables de métaboliser les hydrates de carbone produits par le Lactobacillus
c) le produit obtenu au cours de l'étape de production b) est traité de manière conventionnelle pour en préparer une boisson fermentée.

2. Procédé selon revendication 1, **caractérisé par** l'utilisation du premier moût, du moût chaud, de la bière ou bien de l'extrait de l'orge, de riz, de maïs, de mil, de blé, de seigle ou de sarrasin comme extrait de céréales.

3. Procédé selon revendication 1, **caractérisé par le fait que** le matériau de base contient les ingrédients supplémentaires suivants : de la mélasse, du thé, des extraits de fleurs, des extraits de fruits, des extraits de légumes et/ou des herbes.

4. Procédé selon revendication 1, **caractérisé par le fait que** les boissons sont mélangées en supplément avec des antioxydants, des vitamines, des carbonates, des minéraux, des arômes, des acides gras, des fibres alimentaires, de la caféine et/ou du guarana.

5. Procédé selon revendication 1, **caractérisé par** l'utilisation des lactobacilles du type L. acidophilus, L. helveticus, L. amylovorus, L. amilophilus ou L. salivarius pendant l'étape b).

6. Procédé selon revendication 1, **caractérisé par** l'utilisation d'un saccharomyce comme levure normalement utilisé dans la fabrication de la bière et du vin.

7. Procédé selon revendication 1, **caractérisé par** l'utilisation de Gluconobacter oxydans ssp. industricus, Gluconobacter oxydans ssp. oxydans, Gluconobacter oxydans ssp. melanogenes, Gluconobacter oxydans ssp. suboxydans ou Gluconobacter oxydans ssp. cerinus comme représentants de la famille des Acetobacteriaceae.

8. Procédé selon revendication 1, **caractérisé par** la production d'une boisson non alcoolisée.

9. Procédé selon revendication 1, **caractérisé par** la production d'une boisson alcoolisée.

10. Procédé selon revendication 1, **caractérisé par le fait que** l'étape de production b) prévoit d'abord un traitement avec de la levure et/ou du lysate de levure et/ou le lactobacille et ensuite la production du gluconolactone.

11. Procédé selon revendication 1, **caractérisé par le fait que** l'étape de production b) prévoit d'abord la production du gluconolactone et ensuite la fermentation de l'acide lactique.

12. Procédé selon revendication 1, **caractérisé par le fait que** les acides organiques produites sont tamponnés et édulcorés avec du premier moût riche en minéraux et acidifié.

13. Boisson à base de bière composée d'une boisson préparée selon un des procédés décrits dans les revendications 1-12 et de bière alcoolisée ou non alcoolisée.
